# EUROPÄISCHE PATENTSCHRIFT

(11) **EP 4 428 418 B1**
(45) Veröffentlichungstag und Bekanntmachung des Hinweises auf die Patenterteilung: **02.07.2025**
(21) Anmeldenummer: 23161224.3
(22) Anmeldetag: 10.03.2023
(51) Int. Cl.: F16K 35/04, G05D 23/13, E03C 1/00, E03C 1/04

(54) **VENTILOBERTEIL FÜR SANITÄRARMATUREN**
VALVE UPPER PART FOR SANITARY FITTINGS
PARTIE SUPÉRIEURE DE SOUPAPE POUR ROBINETTERIES SANITAIRES

(43) Veröffentlichungstag der Anmeldung: 11.09.2024
(73) Patentinhaber: Flühs Drehtechnik GmbH, 58515 Lüdenscheid (DE)
(72) Erfinder: Klawin, Tim-Florian, 58553 Halver (DE)
(74) Vertreter: Patentanwälte Dörner & Kötter PartG mbB

(56) Entgegenhaltungen:
- EP-B1- 3 086 010
- EP-B1- 3 093 540
- US-A1- 2014 102 574
- US-A1- 2022 146 002
- US-B1- 6 283 447

## Beschreibung

Die Erfindung betrifft ein Ventiloberteil für eine Sanitärarmatur, insbesondere eine Dusch- oder Wannenarmatur, nach dem Oberbegriff des Patentanspruchs 1.

In thermostatisch regelbaren Duscharmaturen sowie auch Wannenarmaturen werden regelmäßig Thermostat-Mischventile eingesetzt, über welche die gewünschte Wassertemperatur einstellbar ist. Ein solches Thermostat-Mischventil ist beispielsweise in der EP 3 420 430 A1 beschrieben. Bei diesen Armaturen ist weiterhin ein Mengenventil vorhanden, über das die Wassermenge durch den Benutzer einstellbar ist. Ein solches Mengenventil ist beispielsweise in der DE 20 2005 003 127 U1 beschrieben. Weitere Mischventile sind beispielsweise in der EP 3 086 010 B1, der US 2022/146002 A1 sowie der US 2014/102574 A1 beschrieben. Derartige Armaturen verfügen über einen Kaltwasser- und einen Warmwasser-Zulauf. Beide Zuläufe münden in einer Mischkammer des Thermostat-Mischventils, die mit dem Auslauf der Armatur verbunden ist. Im Bereich der Mischkammer ist ein Thermoelement vorgesehen, das die vom Benutzer eingestellte Temperatur regelt. Das Thermoelement ist in der Lage, auf Temperaturschwankungen des Mischwassers zu reagieren und in Abhängigkeit davon entweder den Kaltwasser- oder den Warmwasser-Zulauf zu drosseln bzw. freizugeben, sodass die vom Benutzer gewünschte Temperatur annähernd konstant bleibt.

Das Thermostatventil ist über eine drehbar gelagerte Spindel bedienbar, die mit einem Temperaturwählgriff versehen ist. Um ein Verbrühen bei der Wasserentnahme zu verhindern, weist dieser Temperaturwählgriff einen Sperrknopf auf, der im Regelfall auf 38 °C eingestellt ist und der die maximale Drehung der Spindel des Thermostatventils begrenzt. Die Einstellung der Grenztemperatur erfolgt durch Positionierung des Temperaturwählgriffs auf der Spindel des Thermostat-Mischventils. Erst nach Überwinden der Sperre durch Drücken des Sperrknopfes lässt sich durch weiteres Drehen der Spindel eine höhere Temperatur einstellen.

Die vorbekannte, in den Temperaturwählgriff integrierte Sperre, auch als Verbrühsicherung bezeichnet, gestaltet sich in der Herstellung aufwändig und beeinträchtigt darüber hinaus den ästhetischen Gesamteindruck einer Armatur.

Hier setzt die vorliegende Erfindung an. Der Erfindung liegt die Aufgabe zu Grunde, ein Ventiloberteil zur Verfügung zu stellen, das eine vereinfachte und insbesondere die Ästhetik einer Armatur nicht beeinträchtigende Verbrühsicherung ermöglicht. Gemäß der Erfindung wird diese Aufgabe durch ein Ventiloberteil mit den Merkmalen des Patentanspruchs 1 gelöst.

Mit der Erfindung ist ein Ventiloberteil bereitgestellt, das eine vereinfachte und insbesondere die Ästhetik einer Armatur nicht beeinträchtigende Verbrühsicherung ermöglicht. Dadurch, dass die Mittel zur überwindbaren Begrenzung des maximalen Drehwinkels der Spindel wenigstens ein federnd gelagertes Sperrelement umfassen, das in einer definierten Drehposition der Spindel in eine in der Spindel oder in dem Kopfstück angeordnete Vertiefung eingreift, ist eine in das Ventiloberteil integrierte Drehhemmung bei einer bestimmten Drehposition und damit einer bestimmten Grenztemperatur ermöglicht. Weitere Maßnahmen bei dem zur Bedienung auf die Spindel aufzubringenden Drehgriff sind nicht erforderlich. Die Drehhemmung ist durch signifikante Erhöhung des Drehmoments überwindbar, sodass eine - bewusste - weitere Erhöhung der Wassertemperatur ermöglicht ist.

Es ist eine Ringfeder die Spindel umgreifend angeordnet, über die das wenigstens eine Sperrelement federnd gegen die Spindel vorgespannt gelagert ist, wobei die Spindel wenigstens eine Vertiefung zum Eingriff eines Sperrelements in einer bestimmten Drehposition aufweist. Hierdurch ist eine Minimierung des erforderlichen Bauraums erzielt.

In Ausgestaltung der Erfindung ist das wenigstens eine Sperrelement durch einen vorzugsweise drehbar gelagerten Zylinderkörper gebildet. Hierdurch ist ein gegenüber einem durchaus auch einsetzbaren kugelförmigen Sperrkörper ein signifikanter Drehwiderstand bei Eingriff des Zylinderkörpers in eine Vertiefung ermöglicht. Vorteilhaft ist die wenigstens eine Vertiefung eine in die Spindel eingebrachte Kerbe.

Das wenigstens eine Sperrelement ist in einem Zylinderhalter geführt, das von der Spindel drehbar durchdrungen ist und der von der Ringfeder umgriffen wird, wobei Feststellmittel angeordnet sind, über die der Zylinderhalter in einer gewünschten Drehposition festsetzbar ist. Hierdurch ist eine Einstellung der gewünschten Position der Sperrkörper in dem Kopfstück und damit die Drehposition der Spindel, in der ein Eingriff des wenigstens einen Sperrelements in eine Vertiefung erfolgt, mit nachfolgender Festsetzung dieser gewählten Position des Ringkörpers, in dem die Sperrkörper geführt sind, ermöglicht. Auf diese Weise ist eine Einstellung der Grenztemperatur mit nachfolgender Fixierung dieser Grenztemperatur erzielt.

Die Feststellmittel sind von stirnseitig des Kopfstücks bedienbar. Hierdurch ist die Zugänglichkeit der Feststellmittel in eingebautem Zustand des Ventiloberteils gewährleistet.

In Weiterbildung der Erfindung umfassen die Feststellmittel einen Haltering, der drehfest mit dem Zylinderhalter verbunden ist. Über diesen Haltering ist eine Fixierung des Zylinderhalters in der gewünschten Drehposition ermöglicht. Bevorzugt weist der Zylinderhalter eine unrunde Außenkontur auf, die in eine hierzu korrespondierende unrunde Innenkontur des Halterings eingreift und mit dieser formschlüssig verbunden ist.

In Ausgestaltung der Erfindung umfassen die Feststellmittel das Kopfstück umgreifende Rastmittel, über die der Haltering festsetzbar ist. Hierdurch ist ein Festsetzen des Zylinderhalters in seiner Drehposition über den Haltering ermöglicht.

In weiterer Ausgestaltung der Erfindung umfassen die Rastmittel einen an dem Kopfstück vorhandenen, diesen zumindest bereichsweise umlaufenden Raststeg sowie eine an dem Haltering vorhandene, diesen zumindest bereichsweise radial umlaufende Rastnase, wobei die Schraubmittel vorzugsweise durch wenigstens eine in einer Gewindebohrung des Halterings eingebrachte Schraube gebildet sind, die rechtwinklig zu dem Raststeg gegen das Kopfstück spannbar ist. Durch Anziehen der wenigstens einen Schraube ist ein einfaches Verspannen des Halterings gegen die Rastnut ermöglicht, wodurch der Haltering mit drehfest mit dem Kopfstück verbunden ist. Dadurch ist der Zylinderhalter drehfest durch den Haltering gehalten.

In Weiterbildung der Erfindung umfassen die Feststellmittel ein Innengewinde, über das der Haltering auf ein an dem Kopfstück vorhandenes Außengewinde aufschraubbar ist, wobei ein am dem Haltering anliegender Fixierring auf einem in dem Kopfstück angeordneten Absatz aufliegt. Durch einfaches Anziehen der Schraubverbindung zwischen Haltering und Kopfstück kann der Fixierring gegen des Absatz gepresst werden, wodurch dieser kraftschlüssig in seiner Drehposition fixiert ist.

In Ausgestaltung der Erfindung ist die Spindel radial umlaufend mit einer Verzahnung versehen, die von der wenigstens einen Vertiefung unterbrochen ist. Hierdurch ist ein haptisch ansprechendes Drehen der Spindel erzielt.

In einer Ausführungsform ist das Ventiloberteil als Thermostat-Mischventil ausgebildet. Dabei ist das Ventilelement ein durch Drehung der Spindel axial verschiebbares Stellelement, durch das die Einstellung der gewünschten Temperatur zunächst bis zu einer Grenztemperatur, beispielsweise 38 Grad Celsius ermöglicht ist. An dieser Drehposition greift das wenigstens eine Sperrelement in eine Vertiefung der Spindel ein. Durch signifikante Erhöhung des Drehmoments kann diese Sperrposition überwunden werden, wonach höhere Temperaturen einstellbar sind.

In einer weiteren Ausführungsform ist das Ventiloberteil als Mengenventil ausgebildet, wobei das Ventilelement vorzugsweise eine Steuerscheibe ist, die über die Spindel relativ zu einer ortsfest angeordneten Einlassscheibe verdrehbar ist. In dieser Ausführung dient die radiale Positionierung der federnd vorgespanten Sperrelemente der Einstellung eines bevorzugten Wasservolumenstroms, beispielsweise 50 Prozent des maximalen Volumenstroms. Nach bewusstem Überwinden dieser Sperrposition wiederum durch signifikante Erhöhung des Drehmoments ist dann eine Erhöhung des Wasservolumenstroms möglich.

Andere Weiterbildungen und Ausgestaltungen der Erfindung sind in den übrigen Unteransprüchen angegeben. Ausführungsbeispiele sind in den Zeichnungen dargestellt und werden nachfolgend im Einzelnen beschrieben. Es zeigen:
- Figur 1:: die schematische Darstellung eines Thermostat-Mischventils
- Figur 2:: die Komponenten der Verbrühsicherung des Thermostat-Mischventils aus Figur 1;

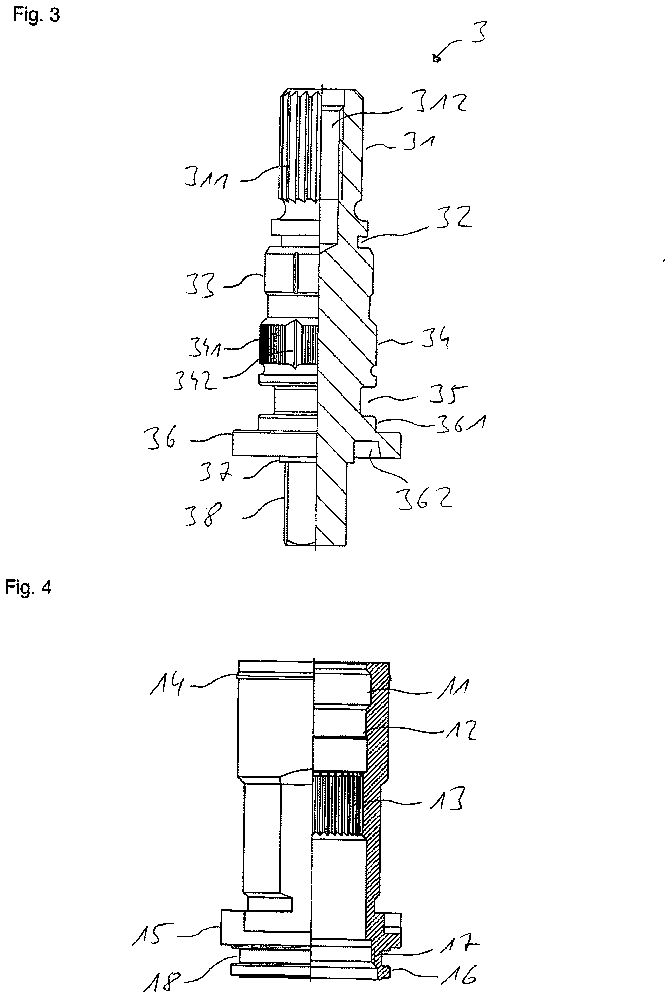

- Figur 3:: die Darstellung der Spindel des Thermostat-Mischventils aus Figur 1 im Teilschnitt;
- Figur 4:: die Darstellung des Kopfstücks des Thermostat-Mischventils aus Figur 1 im Teilschnitt;

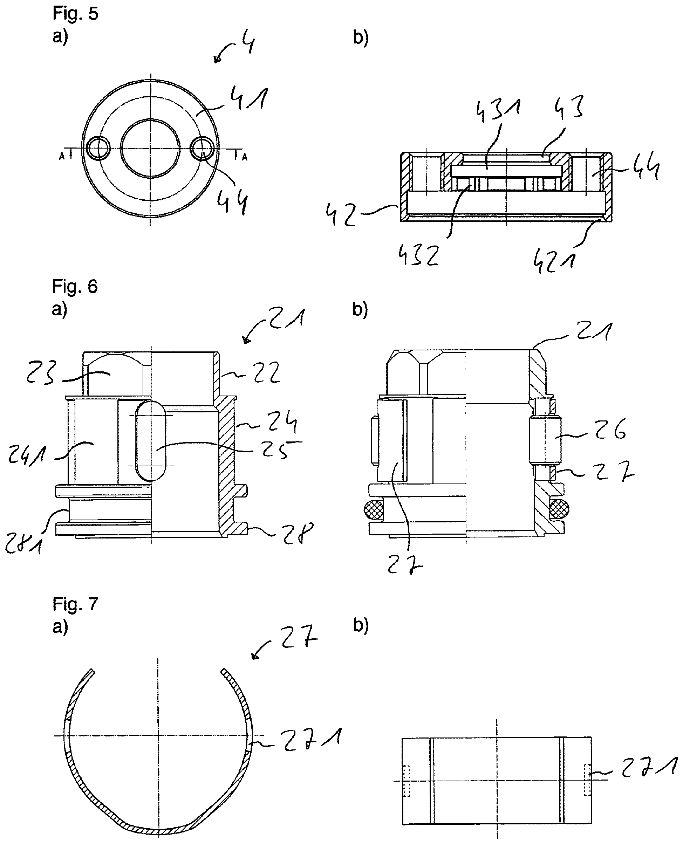

- Figur 5:: die Darstellung des Halterings des Thermostat-Mischventils aus Figur 1
a) in der Draufsicht,
b) im Längsschnitt;
- Figur 6:: die Darstellung der Zylinderhalters der Spindelführung des Thermostat-Mischventils aus Figur 1
a) im Teilschnitt:
b) im Teilschnitt mit Zylinderkörper und Ringfeder;
- Figur 7:: die Darstellung des Federrings der Spindelführung des Thermostat- Mischventils aus Figur 1
a) im Längsschnitt:
b) in der Seitenansicht;
- Figur 8:: die schematische Darstellung eines Thermostat-Mischventils in einer zweiten Ausführungsform;

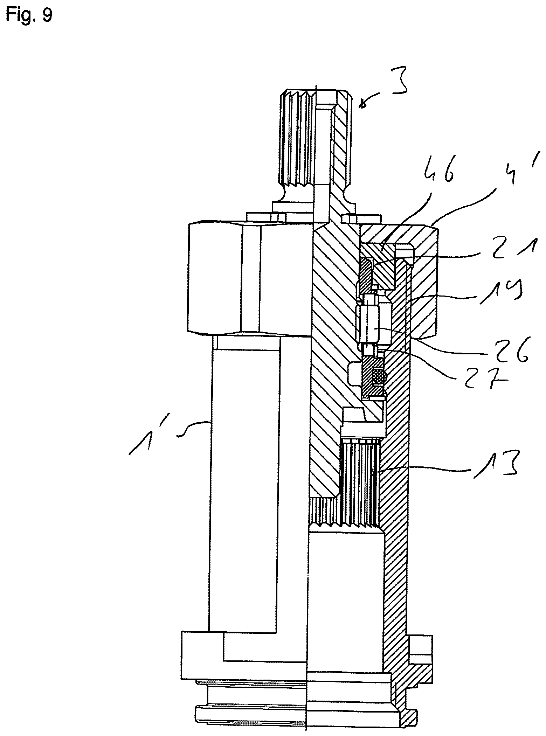

- Figur 9:: die Komponenten der Verbrühsicherung des Thermostat-Mischventils aus Figur 8;

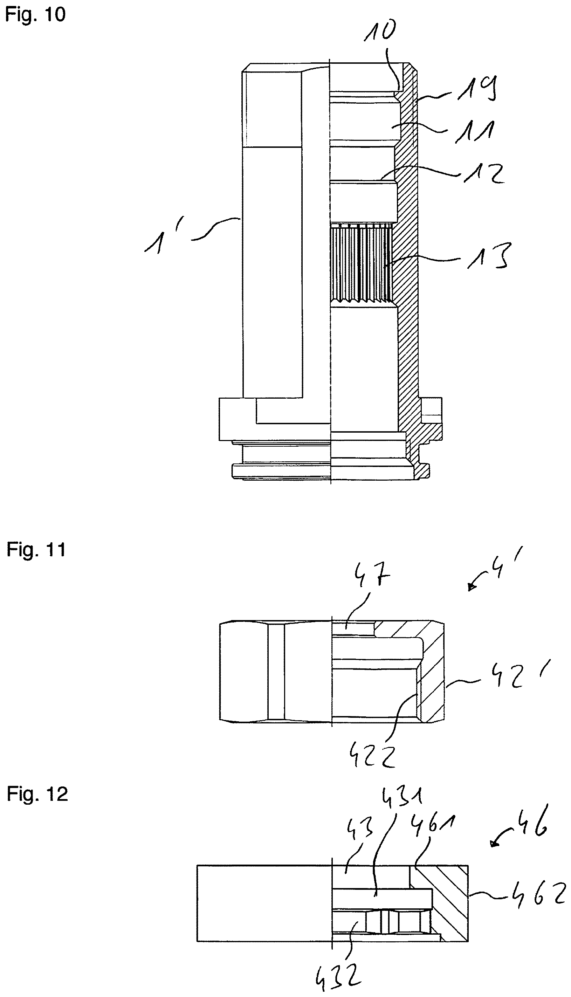

- Figur 10:: die Darstellung des Kopfstücks des Thermostat-Mischventils aus Figur 8 im Teilschnitt ;
- Figur 11:: die Darstellung des Halterings des Thermostat-Mischventils aus Figur 8 im Teilschnitt und
- Figur 12:: die Darstellung des Fixierrings des Thermostat-Mischventils aus Figur 8 im Teilschnitt.

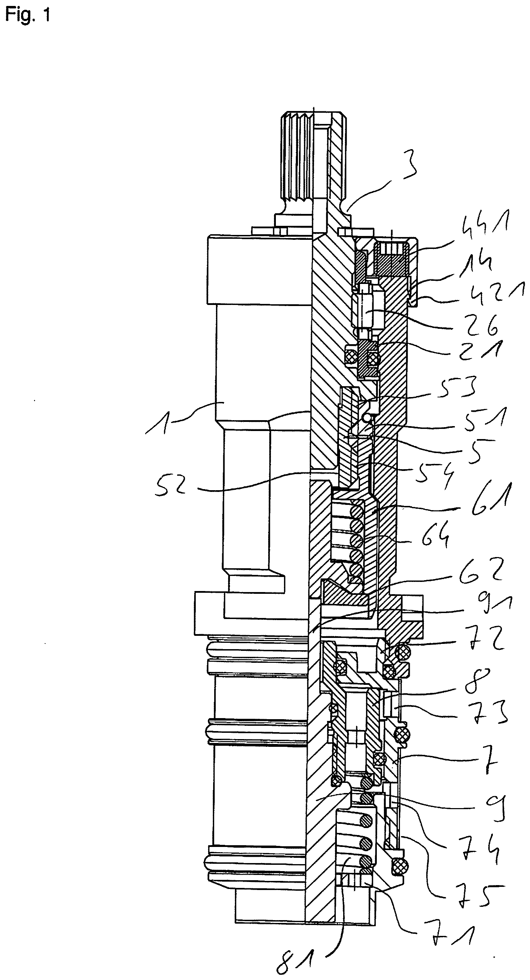

Das als Ausführungsbeispiel gewählte Thermostat-Mischventil gemäß Figur 1 weist ein Kopfstück 1 auf, das endseitig eine Spindelführung 2 aufnimmt, in der eine Spindel 3 drehbar und radial geführt ist und die mit einem Haltering 4 drehfest verbunden ist, der endseitig an dem Kopfstück 1 angeordnet ist. Die Spindel 3 ist drehfest mit einer Gewindehülse 5 verbunden, die über ein Druckstück 51 axial bewegbar in dem Kopfstück 1 angeordnet ist. Das Druckstück 51 steht in Verbindung mit einem Kegel 6, der in dem Kopfstück 1 axial geführt ist. An seinem der Spindel 3 abgewandten Ende ist das Kopfstück 1 mit einer Durchtrittshülse 7 verschraubt, in der ein Schlitten 8 beweglich angeordnet ist, der mit einem Thermoelement 9 verbunden ist. An ihrem der Spindel 3 gegenüberliegendem Ende ist in die Durchtrittshülse 7 ein Bodenstück 71 eingeschraubt.

Das Kopfstück 1 besteht aus einem symmetrischen Hohlkörper, dessen beide Stirnflächen offen sind. Im Bereich der Spindel 3 ist in dem Kopfstück 1 eine Nut 11 eingebracht., an die sich ein abgestufter hohlzylindrischer Abschnitt 12 anschließt, der von einem nachfolgend angeordneten Innenvielkantabschnitt 13 begrenzt ist. Der Innenvielkantabschnitt 13 verhindert eine Drehung des Druckstücks 51 sowie des Kegels 6 innerhalb des Kopfstücks 1. In Höhe der Nut 11 ist an dem Kopfstück 1 außen umlaufend ein Raststeg 14 angeordnet. An seinem der Spindel 3 abgewandten Ende ist an dem Kopfstück 1 ein Auflageflansch 15 angeordnet, an den sich ein axialer Kragen 16 anschließt, der mit einem Innengewinde 17 versehen ist. In Höhe des Innengewindes 17 ist außen umlaufend eine Ringnut 18 zur Aufnahme eine O-Rings angeordnet.

Die Spindelführung 2 umfasst einen Zylinderhalter 21, der als im Wesentlichen symmetrischer Hohlkörper ausgebildet ist, dessen beide Stirnflächen offen sind. An seinem dem Anschlussabschnitt 31 der Spindel 3 zugewandten Ende weist der Zylinderhalter 21 einen Führungsabschnitt 22 auf, der innen zylindrisch und außen als Außensechskant 23 ausgebildet ist. An den Führungsabschnitt 22 schließt sich ein durchmessererweiterter Abschnitt 24 an, der außen umlaufend mit beabstandet zueinander angeordneten Abflachungen 241 versehen ist und in den diametral gegenüberliegend zwei sich axial erstreckende Langlochbohrungen 25 eingebracht sind, die jeweils eine Zylinderkörper 26 aufnehmen. Die Zylinderkörper 26 umspannend ist auf den Führungsabschnitt 22 eine Ringfeder 27 aufgebracht, die zwei rechteckige Aussparungen 271 aufweist, deren Breite jeweils geringer ist, als der Durchmesser des durch diese jeweils bereichsweise hindurchtretenden Zylinderkörpers 26. Der durchmessererweiterter Abschnitt 24 ist endseitig von einem Absatz 28 begrenzt, in den umlaufend eine Ringnut 281 zur Aufnahme eines O-Rings eingebracht ist.

Die Spindel 3 weist an ihrem einen Ende ein Anschlussstück 31 auf, das außen als Vielkant 311 ausgeführt und innen mit einem Sackloch 312 mit Innengewinde versehen ist. Das Anschlussstück 31 dient der Aufnahme für einen - nicht dargestellten - Drehgriff oder Hebel. Beabstandet zu dem Anschlussstück 31 ist außen in die Spindel 3 ein Einstich 32 zur Aufnahme eines Sicherungsrings 321 eingebracht, an den sich ein zylindrischer Abschnitt 33 anschließt. Axial beabstandet von dem zylindrischen Abschnitt 33 weist die Spindel 3 einen Anlageabschnitt 34 auf, der umlaufend mit einer Verzahnung 341 versehenen ist. Innerhalb des mit der Verzahnung 341 versehenen Bereichs des Anlageabschnitts 34 sind in diesen diametral gegenüberliegend zwei axial sich erstreckende Kerben 342 zum Eingriff jeweils eines Zylinderkörpers eingebracht. Beabstandet zu dem Anlageabschnitt 34 ist eine Nut 35 angeordnet, an die sich ein umlaufender Spindelbund 36 anschließt, der eine umlaufenden Stufe 361 aufweist , durch den die Nut 35 begrenzt ist. An seiner der Stufe 361 gegenüberliegenden Unterseite ist in den Spindelbund 36 eine ringförmige Ausnehmung 362 eingebracht. Im Anschluss an den Spindelbund 36 ist ein Absatz 37 vorgesehen, an den sich ein Außenmehrkant 38 anschließt, der vorliegend als Außensechskant ausgebildet ist.

Der Haltering 4 umfasst eine Scheibe 41, an die außen umlaufend ein ringförmiger Flansch 42 angeordnet ist, dessen Außendurchmesser dem Außendurchmesser der Scheibe 41 entspricht. An seinem freien Ende weist der Flansch 42 innen umlaufend eine Rastnase 421 auf. In die Scheibe 41 ist zentrisch eine axiale Stufenbohrung 43 eingebracht, deren dem Flansch 42 zugewandter durchmessererweiterter Abschnitt 431 umlaufend mit Einkerbungen 432 zur Aufnahme des Außensechskants 23 des Führungsabschnitts 22 des Zylinderhalters 21 versehen ist. Beabstandet zu der Stufenbohrung 43 sind in die Scheibe 41 diametral gegenüberliegend zwei Gewindebohrungen 44 zur Aufnahme einer Madenschraube 441 eingebracht.

Die Gewindehülse 5 ist im Wesentlichen hohlzylindrisch ausgebildet und weist einen Innenmehrkant 52 auf, in den der Außenmehrkant 38 der Spindel 3 in Montagestellung hineinragt. Außen ist die Gewindehülse 5 mit zwei zueinander beabstandet angeordneten Außengewinden 53 und 54 versehen, die zueinander gegenläufig ausgebildet sind. Die Gewindehülse 5 ist über das erste Außengewinde 53 mit dem Druckstück 51 verschraubt, das hierzu mit einem Innengewinde versehen ist. Außen weist das Druckstück 51 auf seiner der Spindel 3 abgewandten Seite einen Außenvielkant auf, mit dem es in dem Innenvielkantabschnitt 13 des Kopftstücks drehfest axial bewegbar geführt ist. Mit seiner der Spindel 3 zugewandten Seite stützt sich das Druckstück 51 an dem durch die ringförmige Ausnehmung 362 des Spindelbundes 36 gebildeten Kragen 363 ab

Der Kegel 6 umfasst eine Buchse 61, die bodenseitig über eine kegelförmige Überlastscheibe 62 verschlossen ist und die einen Überlastbolzen 63 aufnimmt, der über eine Spiralfeder 64 gegen die Überlastscheibe 62 vorgespannt ist. Der Kegel 6 ist im Wesentlichen hohlzylindrisch ausgebildet. Er weist an seinem der Spindel 3 zugewandten Ende einen Außenvielkant 611 auf, der in dem Innenvielkantabschnitt 13 des Kopfstücks 1 verdrehsicher geführt ist. Innen ist in Höhe des Außenvielkants 611 in der Buchse 61 ein Innengewinde eingebracht, mittels dessen diese mit dem zweiten Außengewinde 54 der Gewindehülse 5 verschraubt ist.

Die Durchtrittshülse 7 ist im Wesentlichen hohlzylindrisch ausgebildet und weist an ihrem der Spindel 3 zugewandten Ende einen axialen Kragen 72 mit einem Außengewinde auf, mit dem es in das Innengewinde 17 des Kopfstücks 1 eingeschraubt ist. Im Anschluss an das Außengewinde weist die Durchtrittshülse 7 innen einen umlaufenden radialen Kragen auf, der einen Anschlag für den Schlitten 8 bildet. In die Durchtrittshülse 7 sind erste Fenster 73 für den Wasserdurchtritt vorgesehen, die in derselben Ebene symmetrisch verteilt in ihrer Wandung ausgespart sind. Im Ausführungsbeispiel sind drei erste Fenster 73 angeordnet. Die ersten Fenster 73 sind für den Durchtritt kalten Wassers vorgesehen. Axial beabstandet zu den ersten Fenstern 73 sind zweite Fenster 74 für den Durchtritt warmen Wassers vorgesehen, die im Wesentlichen den gleichen Querschnitt wie die ersten Fenster 73 aufweisen und diesen vergleichbar ausgebildet sind. Die Fenster 73, 74 sind zur Verhinderung des Eindringens von Schmutzpartikeln jeweils über ein Siebmantelgeflecht 75 abgedeckt. Endseitig ist an der Durchtrittshülse 7 innen ein Innengewinde angeordnet, über das sie mit dem Bodenstück 71 verschraubt ist.

Der Schlitten 8 ist im Wesentlichen hohlzylindrisch ausgebildet und im Bereich der Fenster 73 und 74 der Durchtrittshülse 7 angeordnet. In dem Bodenstück 71 ist eine Strömungsscheibe angeordnet, an der eine Schraubenfeder 81 anliegt, die gegen den Schlitten 8 vorgespannt ist. Der Schlitten 8 nimmt das Thermoelement 9 auf, das gegen den Schlitten 8 über O-Ringe abgedichtet ist.

Das Thermostat-Mischventil ist im montierten Zustand fest in eine - nicht dargestellte Armatur eingesetzt. Eine Drehung der Spindel 3 über den Anschlussabschnitt 31 mittels eines - nicht dargestelltes - Drehgriffs führt aufgrund der ineinandergreifenden Vielkante 38, 52 von Spindel 3 und Gewindehülse 5 zu einer Drehbewegung der Gewindehülse 5. Die Drehbewegung der Gewindehülse 5 führt einerseits aufgrund der drehfesten Anordnung des Druckstücks 51 zu einer Axialbewegung der Gewindehülse 5 selbst sowie aufgrund der drehfesten Anordnung des Kegels 6 in dem Kopfstück 1 durch die Kombination der Vielkante 13, 611 von Kopfstück 1 und Kegel 6 zu einer Axialbewegung des Kegels 6. Eine solche Axialbewegung des Kegels 6 bewirkt über den Kontakt des Überlastbolzens 63 mit dem Stellkolben 91 des Thermoelements 9 eine Verschiebung des das Thermoelement 9 aufnehmenden Schlittens 8, wodurch die gewünschte Mischstellung des Schlittens 8 zwischen den Fenstern 73 (Kaltwasserdurchtritt) und 74 (Warmwasserdurchtritt) erzielt wird. Der Schlitten 8 wird dabei gegen die Federspannung der Schraubenfeder 81 bewegt. Das durch die Fenster 73, 74 einströmende Kalt- und Warmwasser umspült das Thermoelement 9, welches über den Stellkolben 91 die Einregelung der gewünschten Temperatur übernimmt.

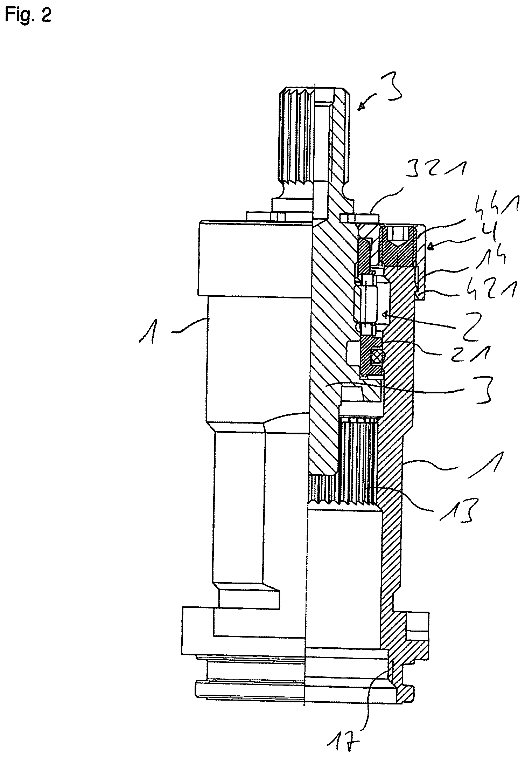

Wird die Spindel 3 innerhalb der Spindelführung 2 gedreht, werden die Zähne der Verzahnung 341 an den über die Ringfeder 27 durch die Langlochbohrungen 25 des Zylinderhalters 21 gegen diese vorgespannten Zylinderkörper 26 entlangbewegt, wodurch eine haptisch ansprechende Drehbedienung erzielt ist. Passieren die Kerben 342 die Zylinderkörper 26, so gleiten diese durch die Vorspannung der Ringfeder 27 in die Kerben 342 ein, wodurch die Drehbewegung der Spindel 3 gehemmt wird. Die Kerben 342 bilden so im Zusammenspiel mit den über die Ringfeder 27 gegen die Spindel 3 vorgespannten Zylinderkörper 26 eine - von außen nicht sichtbare - Verbrühsicherung. Ist eine höhere Wassertemperatur gewünscht, kann die Spindel 3 mittels eines signifikant höheren Drehmoments weitergedreht werden, was erforderlich ist, um die Zylinderkörper 26 gegen die Vorspannung der Ringfeder 27 aus den Kerben 342 herauszubewegen. Zur besseren Übersicht sind die wesentlichen Bauteile der Verbrühsicherung des Thermostatmischventils in Figur 2 wiedergegeben.

Die drehfeste Befestigung der Spindelführung 2 erfolgt durch den Haltering 4. Der Führungsabschnitt 22 des Zylinderhalters 21 ist mit seinem Außensechskant 23 in die Einkerbungen 432 der Scheibe 41 des Halterings 4 eingesetzt, wodurch der Zylinderhalter 21 drehfest mit dem Haltering 4 verbunden ist. Der Haltering 4 ist auf das Kopfstück 1 aufgestülpt, wobei der Anschlussabschnitt 31 der Spindel 3 durch die Stufenbohrung 43 hindurchgeführt ist. Dabei hintergreift die Rastnase 421 des Halterings 4 den umlaufenden Raststeg 14 des Kopfstücks 1, wodurch der Haltering axial an dem Kopfstück 1 fixiert ist. Durch Festziehen der in die Gewindebohrungen 44 eingeschraubten Madenschrauben 441, werden diese stirnseitig gegen das Kopfstück 1 gepresst, wodurch die Rastnase 421 gegen den Raststeg 14 gepresst wird. Hierdurch wird eine kraftschlüssige, drehfeste Verbindung zwischen dem Haltering 4 und dem Kopfstück 1 bewirkt.

Zur Einstellung der Grenztemperatur, bei der die zuvor beschriebene Verbrühsicherung greifen soll, können die Madenschrauben 441 gelöst werden, wodurch der Kraftschluss zwischen der Rastnase 421 des Halterings und dem Raststeg 14 des Kopfstücks 1 aufgehoben wird. Der Haltering 1 ist somit auf dem Kopfstück axial fixiert, jedoch drehbar angeordnet. Durch Drehung des Halterings 4 auf dem Kopfstück 1 kann die Drehstellung des mit dem Haltering 4 drehfest verbundenen Zylinderhalters 21 der Spindelführung 2 innerhalb des Kopfstücks1 , und damit die Drehposition der Spindel 3, bei der die Zylinderkörper 26 in die Kerben 342 einrasten, eingestellt werden. Ist die gewünschte Position erreicht - und damit die gewünschte Grenztemperatur eingestellt - wird der Haltering 4 durch Anziehen der Madenschrauben 441 wieder kraftschlüssig drehfest mit dem Kopfstück 1 verbunden.

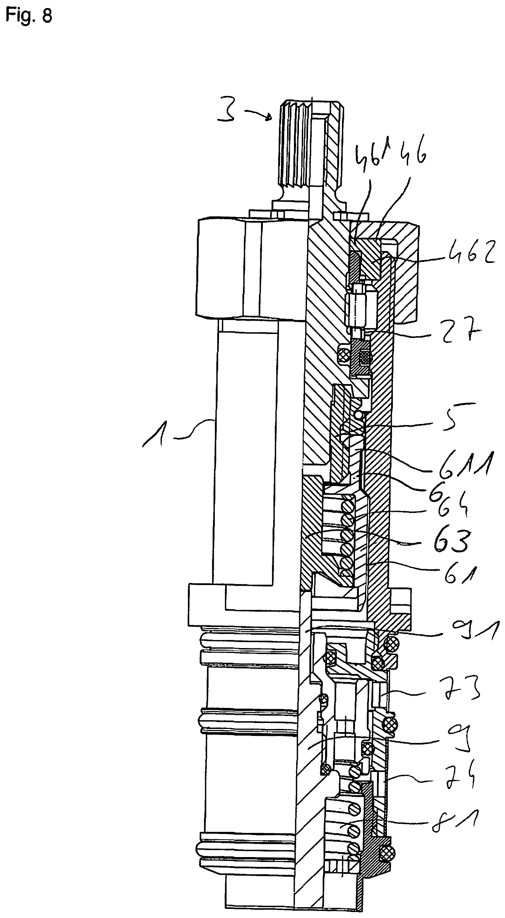

Im Ausführungsbeispiel gemäß Figur 8 weist der Haltering 4' eine zentrische Bohrung 47 auf und der Flansch 42' ist mit einem Innengewinde 422 versehen, über das er auf ein an dem Kopfstück 1' hierzu angeordneten Außengewinde 19 aufschraubbar ist. An dem Haltering 4' liegt ein Fixierring 46 an, der in Form einer Scheibe 461 ausgebildet ist, die einem umlaufenden Kragen 462 aufweist. Die Scheibe 461 des Fixierrings 46 weist zentrisch eine Stufenbohrung 43 auf, deren dem Flansch 42 zugewandter durchmessererweiterter Abschnitt 431 umlaufend mit Einkerbungen 432 versehen ist, in die der Außensechskant 23 des Führungsabschnitts 22 des Zylinderhalters 21 versehen eingreift, wodurch der Fixierring 46 mit dem Zylinderhalter 21 formschlüssig verbunden ist.

Der Fixierring 46 liegt mit seinem Kragen 462 auf einem hierzu innen oberhalb der Nut 11 in dem Kopfstück 1' angeordneten Absatz 10 auf. Zur Einstellung der Grenztemperatur kann der Haltering 4' gelöst werden, sodass der Fixierring 46 axial gehalten, jedoch im Kopfstück 1' drehbar ist. Durch eine Drehung des Fixierrings 46 kann eine Drehung des mit diesem formschlüssig verbundenen Zylinderhalters 21 der Spindelführung 2 innerhalb des Kopfstücks1' erfolgen. Bei in die Kerben 342 eingerasteten Zylinderkörpern 26 ist der Zylinderhalter 21 mit dem mit diesem formschlüssig verbundenen Fixierring 46 über die Spindel 3 drehbar. Dadurch erfolgt eine Einstellung der Drehposition der Spindel 3, bei der die Zylinderkörper 26 in die Kerben 342 eingerastet sind. Anschließend wird der Haltering 4'auf dem Kopfstück 1' festgeschraubt. Hierdurch wird der Fixierring 46 mit seinem Kragen 462 gegen den Absatz 10 gepresst, wodurch der Fixierring 46, und über diesen auch der Zylinderhalter 21, kraftschlüssig drehfest mit dem Kopfstück 1' verbunden ist.

Die erfindungsgemäße Anordnung der eine Spindel 3 aufnehmenden Spindelführung 2 in einem Kopfstück 1 mit einem einteiligen oder zweiteiligen Haltering 4, 4', 46 zur Realisierung einer Verbrühsicherung ist nicht auf den Einsatz bei Thermostat-Mischventilen beschränkt. Beispielsweise ist es auch möglich, diese Anordnung bei einem Mengenventil, wie es zum Beispiel in der DE 32 07 895 C2 beschrieben ist, einzusetzen. Hierzu wäre an der Spindel lediglich endseitig ein Mitnehmer zum Eingriff in die an der Einlassscheibe anliegenden Steuerscheibe anzuordnen. Bei einem solchen Mengenventil wäre es dann möglich, den Zylinderkörper bei Erreichen eines definierten Wasservolumenstroms in die Kerbe 342 eingreifen zu lassen. Eine Erhöhung des Wasservolumenstroms über diesen definierten Grenzwert hinaus wäre nur unter bewusster signifikanter Erhöhung des Drehmoments an der Spindel ermöglicht. Eine unbewusste Einstellung eines zu hohen Wasservolumenstroms wäre so vermieden. Ebenfalls ist diese erfindungsgemäße Anordnung auch bei einem Mischventil ohne Thermostat einsetzbar, wie es zum Beispiel in der DE 20 2005 003 127 U1 beschrieben ist. Hier legt der Eingriff des Zylinderkörpers in die Kerbe eine Grenztemperatur in Form eines festen Mischverhältnisses von warmen und kalten Zulaufwasser fest. Im Gegensatz zu einem Thermostatventil kann diese Grenztemperatur jedoch in Abhängigkeit der tatsächlichen Wasserzulauftemperaturen (Warmwasser / Kaltwasser) schwanken.

## Patentansprüche

1. Ventiloberteil für eine Sanitärarmatur, insbesondere eine Dusch- oder Wannenarmatur, mit einem Kopfstück (1), das von einer Spindel (3) durchsetzt ist, die in den Kopfstück (1) drehbar, jedoch axial fixiert angeordnet ist und die mit einem Ventilelement verbunden ist, das über die Spindel (3) steuerbar ist, wobei Mittel zur überwindbaren Begrenzung des maximalen Drehwinkels der Spindel (3) angeordnet sind, wobei die Mittel wenigstens ein federnd gelagertes Sperrelement umfassen, das in einer definierten Drehposition der Spindel (3) in eine in der Spindel (3) oder in dem Kopfstück angeordnete Vertiefung eingreift, wobei eine Ringfeder (27) die Spindel (3) umgreifend angeordnet ist, über die das wenigstens eine Sperrelement federnd gegen die Spindel (3) vorgespannt gelagert ist, wobei die Spindel (3) wenigstens eine Vertiefung zum Eingriff eines Sperrelements in einer bestimmten Drehposition aufweist, wobei das wenigstens eine Sperrelement in einem Zylinderhalter (21) geführt ist, der von der Spindel (3) drehbar durchdrungen ist und der von der Ringfeder (27) umgriffen wird, wobei Feststellmittel angeordnet sind, über die der Zylinderhalter (21) in einer gewünschten Drehposition in dem Kopfstück (1) festsetzbar ist, **dadurch gekennzeichnet dass** Feststellmittel von stirnseitig des Kopfstücks (1) bedienbar sind.

2. Ventiloberteil nach Anspruch 1, **dadurch gekennzeichnet, dass** das wenigstens eine Sperrelement durch einen vorzugsweise drehbar gelagerten Zylinderkörper (26) gebildet ist, wobei die wenigstens eine Vertiefung eine in die Spindel (3) eingebrachte Kerbe (342) ist.

3. Ventiloberteil nach Anspruch 1 oder 2, **dadurch gekennzeichnet, dass** die Feststellmittel einen Haltering (4, 46) umfassen, der drehfest mit dem Zylinderhalter (21) verbunden ist.

4. Ventiloberteil nach Anspruch 3, **dadurch gekennzeichnet, dass** der Zylinderhalter (21) eine unrunde Außenkontur aufweist, die in eine hierzu korrespondierende unrunde Innenkontur des Halterings (4, 46) eingreift und mit dieser formschlüssig verbunden ist.

5. Ventiloberteil nach Anspruch 3 oder 4, **dadurch gekennzeichnet, dass** die Feststellmittel das Kopfstück (1) umgreifende Rastmittel umfassen, über die der Haltering (46) festsetzbar ist, wobei bevorzugt Schraubmittel angeordnet sind, über welche die Rastmittel gegeneinander verspannbar sind.

6. Ventiloberteil nach Anspruch 5, **dadurch gekennzeichnet, dass** die Rastmittel einen an dem Kopfstück vorhandenen, diesen zumindest bereichsweise umlaufenden Raststeg (14) sowie eine an dem Haltering (4) vorhandene diesen zumindest bereichsweise radial umlaufende Rastnase (421) umfassen, wobei die Schraubmittel vorzugsweise durch wenigstens eine in einer Gewindebohrung des Halterings (4) eingebrachte Schraube gebildet sind, die rechtwinklig zu dem Raststeg (14) gegen das Kopfstück (1) spannbar ist.

7. Ventiloberteil nach Anspruch 5, **dadurch gekennzeichnet, dass** die Feststellmittel ein Innengewinde umfassen, über das der Haltering (4') auf ein an dem Kopfstück (1') vorhandenes Außengewinde (19) aufschraubbar ist, wobei ein am dem Haltering (4') anliegender Fixierring (46) auf einem in dem Kopfstück (1') angeordneten Absatz (10) aufliegt.

8. Ventiloberteil nach einem der vorgenannten Ansprüche, **dadurch gekennzeichnet, dass** die Spindel radial umlaufend mit einer Verzahnung versehen ist, die von der wenigstens einen Vertiefung unterbrochen ist.

9. Ventiloberteil nach einem der vorgenannten Ansprüche, **dadurch gekennzeichnet, dass** dieses als Thermostat-Mischventil ausgebildet ist, wobei das Ventilelement ein durch Drehung der Spindel axial verschiebbares Stellelement ist.

10. Ventiloberteil nach einem der Ansprüche 1 bis 8, **dadurch gekennzeichnet, dass** dieses als Mengenventil ausgebildet ist, wobei das Ventilelement eine Steuerscheibe ist, die über die Spindel relativ zu einer ortsfest angeordneten Einlassscheibe verdrehbar ist.

## Claims

1. Valve upper part for a sanitary fitting, in particular a shower or bath fitting, with a head piece (1), which is penetrated by a spindle (3), which is arranged rotatably, but axially fixed, in the head piece (1) and which is connected to a valve element, which can be controlled via the spindle (3), wherein means are arranged for the surmountable limitation of the maximum angle of rotation of the spindle (3), wherein the means comprise at least one resiliently mounted locking element, which engages in a recess arranged in the spindle (3) or in the head piece in a defined rotational position of the spindle (3), wherein an annular spring (27) is arranged engaging around the spindle (3), via which the at least one locking element is mounted so as to be resiliently pretensioned against the spindle (3), wherein the spindle (3) has at least one recess for engagement of a locking element in a specific rotational position, wherein the at least one locking element is guided in a cylinder holder (21), which is rotatably penetrated by the spindle (3) and which is encompassed by the annular spring (27), wherein fixing means are arranged, via which the cylinder holder (21) can be fixed in a desired rotational position in the head piece (1), **characterised in that** the fixing means can be operated from the end face of the head piece (1).

2. Valve upper part according to claim 1, **characterised in that** the at least one locking element is formed by a preferably rotatably mounted cylinder body (26), wherein the at least one recess is a notch (342) inserted in the spindle (3).

3. Valve upper part according to claim 1 or 2, **characterised in that** the fixing means comprise a retaining ring (4, 46), which is connected in a rotationally fixed manner to the cylinder holder (21).

4. Valve upper part according to claim 3, **characterised in that** the cylinder holder (21) has a non-circular outer contour, which engages in a non-circular inner contour of the retaining ring (4, 46) corresponding thereto and is positively connected thereto.

5. Valve upper part according to claim 3 or 4, **characterised in that** the fixing means comprise latching means engaging around the head piece (1), via which the retaining ring (46) can be fixed, wherein preferably screw means are arranged, via which the latching means can be clamped against one another.

6. Valve upper part according to claim 5, **characterised in that** the latching means comprise a latching web (14) provided on the head piece and surrounding it at least in some areas as well as a latching lug (421) provided on the retaining ring (4) and surrounding it radially at least in some areas, wherein the screw means are preferably formed by at least one screw inserted in a threaded bore of the retaining ring (4), which can be clamped against the head piece (1) at right angles to the latching web (14).

7. Valve upper part according to claim 5, **characterised in that** the fixing means comprise an internal thread, via which the retaining ring (4') can be screwed onto an external thread (19) provided on the head piece (1'), wherein a fixing ring (46) resting on the retaining ring (4') rests on a shoulder (10) arranged in the head piece (1').

8. Valve upper part according to one of the preceding claims, **characterised in that** the spindle is radially circumferentially provided with a toothing, which is interrupted by the at least one recess.

9. Valve upper part according to one of the preceding claims, **characterised in that** this is designed as a thermostatic mixing valve, wherein the valve element is an actuating element axially displaceable by rotation of the spindle.

10. Valve upper part according to one of claims 1 to 8, **characterised in that** this is designed as a flow control valve, wherein the valve element is a control disc, which can be rotated relative to a stationarily arranged inlet disc via the spindle.

## Revendications

1. Partie supérieure de soupape pour une robinetterie sanitaire, en particulier une robinetterie de douche ou de baignoire, comprenant une pièce têtière (1) traversée par une broche (3) qui est disposée de façon à pouvoir tourner dans la pièce têtière (1), mais qui est fixée sur le plan axial et qui est reliée avec un élément de soupape, élément qui est pilotable via la broche (3), sachant que sont disposés des moyens pour limiter, de façon dépassable, l'angle de rotation de la broche (3), sachant que ces moyens comprennent au moins un élément de verrouillage sur appui amortisseur, élément qui, sur une position de rotation définie de la broche (3), engrène dans un creux ménagé dans la broche (3) ou dans la pièce têtière, sachant qu'un ressort annulaire (27) est disposé de façon à ceinturer la broche (3), ressort via lequel au moins un élément de verrouillage est en appui amortisseur précontraint contre la broche (3), sachant que la broche (3) présente au moins un creux pour l'engrènement d'un élément de verrouillage sur une position précise de rotation, sachant qu'au moins un élément de verrouillage est guidé dans un support (21) de cylindre, support qui est traversé par la broche (3) de sorte à permettre de tourner, et qui est ceinturé par le ressort annulaire (27), sachant que sont disposés des moyens de blocage via lesquelles le support (21) de cylindre est blocable dans la pièce têtière (1) sur une position de rotation souhaitée, **caractérisée en ce que** les moyens de blocage sont utilisables depuis le côté frontal de la pièce têtière (1).

2. Partie supérieure de soupape selon la revendication 1, **caractérisée en ce qu'**au moins un élément de verrouillage est formé par un corps (26) de cylindre de préférence en appui rotatif, sachant qu'au moins un creux est une encoche (342) ménagé dans la broche (3).

3. Partie supérieure de soupape selon la revendication 1 ou 2, **caractérisée en ce que** les moyens de blocage comprennent une bague de retenue (4, 46) reliée sans pouvoir tourner avec le support (21) de cylindre.

4. Partie supérieure de soupape selon la revendication 3, **caractérisée en ce que** le support (21) de cylindre présente un contour extérieur non circulaire qui engrène dans un contour intérieur lui aussi non circulaire de la bague de retenue (4, 46) et est relié avec cette dernière par adhérence de formes.

5. Partie supérieure de soupape selon la revendication 3 ou 4, **caractérisée en ce que** les moyens de blocage comprennent des moyens de crantage ceinturant la pièce têtière (1) et via lesquels il est possible d'immobiliser la bague de retenue (46), sachant que sont disposés de préférence des moyens de vissage via lesquels les moyens de crantage sont serrables les uns contre les autres.

6. Partie supérieure de soupape selon la revendication 5, **caractérisée en ce que** les moyens de crantage comprennent une nervure de crantage (14) présente contre la pièce têtière et entourant cette dernière au moins localement, ainsi qu'une saillie de crantage (421) présente contre la bague de retenue (4) et l'entourant au moins localement sur le plan radial, sachant que les moyens de vissage sont formés de préférence par au moins une vis introduite dans un alésage fileté de la bague de retenue (4), vis qu'il est possible de serrer perpendiculairement à la nervure de crantage (14) contre la pièce têtière (1).

7. Partie supérieure de soupape selon la revendication 5, **caractérisée en ce que** les moyens de blocage comprennent un filetage intérieur via lequel la bague de retenue (4') est vissable sur un filetage extérieur (19) présent contre la pièce têtière (1'), sachant qu'une bague de fixation (46) appliquant contre la bague de retenue (4') applique sur un épaulement (10) disposé dans la pièce têtière (1').

8. Partie supérieure de soupape selon l'une des revendications précédentes, **caractérisée en ce que** la broche est munie périphériquement, sur le plan radial, d'une denture qui est interrompue par au moins un creux.

9. Partie supérieure de soupape selon l'une des revendications précédentes, **caractérisée en ce que** celle-ci est configurée comme un mitigeur thermostatique, sachant que l'élément soupape est un élément de réglage déplaçable axialement en tournant la broche.

10. Partie supérieure de soupape selon l'une des revendications 1 à 8, **caractérisée en ce que** celle-ci est configurée en soupape de débit, sachant que l'élément soupape est un disque de commande qu'il est possible de tourner via la broche, relativement à un disque d'admission disposé fixe.
